# EUROPEAN PATENT APPLICATION

(11) **EP 3 885 886 A1**
(43) Date of publication of application: **29.09.2021**
(21) Application number: 19887500.7
(22) Date of filing: 20.11.2019
(51) Int. Cl.: G06F 3/0488

(54) **MULTIPLE SEQUENCE SAFETY DISPLAY AND CONTROL TOUCH SCREEN SYSTEM OF NUCLEAR POWER PLANT AND CONTROL METHOD**

(30) Priority: 21.11.2018 CN 201811389816
(71) Applicant: China Nuclear Power Design Company Ltd. (Shenzhen), Shenzhen, Guangdong 518100 (CN); China Nuclear Power Engineering Co., Ltd., Shenzhen, Guangdong 518124 (CN); China General Nuclear Power Corporation, Shenzhen, Guangdong 518026 (CN); CGN Power Co., Ltd., Shenzen, Guangdong 518026 (CN)
(72) Inventor: MEI, Shibai, Shenzhen, Guangdong 518100 (CN); CHENG, Bo, Shenzhen Guangdong 518100 (CN); ZHANG, Gang, Shenzhen, Guangdong 518100 (CN); WU, Yi qian, Shenzhen, Guangdong 518100 (CN); MAO, Ting, Shenzhen, Guangdong 518100 (CN); YU, Zhenglong, Shenzhen, Guangdong 518100 (CN); ZOU, Jie, Shenzhen, Guangdong 518100 (CN); WANG, Yan, Shenzhen, Guangdong 518100 (CN); ZHOU, Yichao, Shenzhen, Guangdong 518100 (CN); LIU, Xiaoyu, Shenzhen, Guangdong 518100 (CN); QIAO, Jianwang, Shenzhen, Guangdong 518100 (CN)
(74) Representative: Greaves Brewster LLP
(86) International application number: PCT/CN2019/119671
(87) International publication number: WO 2020/103857

(57) **Abstract**

The present invention provides a multi sequence safety display and control touch screen system of a nuclear power plant and a control method. The multi sequence safety display and control touch screen system includes a non safety processing unit for sending a sequence invoking signal, multiple single sequence safety processing units for receiving the invoking signal, and a screen switching module for switching device state information and operation interface of a single sequence safety processing unit of an invoked sequence under a first or a second screen switching mode and locking the device state information and operation interfaces of other sequences. The present invention overcomes the disadvantages in the prior art of a low working efficiency, and the increase in an operation load and a safe running risk since each sequence safety processing unit needs to be correspondingly provided with a single sequence safety display and control touch screen. By adding the screen switching module, the device state information and operation interfaces of the multiple single sequence safety processing units are switched to and displayed on a same M-SDCTS, thereby optimizing the design of a digital human machine interface of a control room of the nuclear power plant and improving the working efficiency and the safety performance of the nuclear power plant.

## Description

### FIELD OF THE INVENTION

The present invention generally relates to the safe operation of the nuclear power plants and, more particularly, relates to a nuclear power plant human machine interface for multi sequence safety device state display and control based on digital technology and provides a multi sequence safety display and control touch screen system of a nuclear power plant and a control method.

### BACKGROUND OF THE INVENTION

Nuclear power plant operation technology involves nuclear accident safety, public environment treatment, and the technical complexity of the nuclear power plant itself. Therefore, it is necessary to strictly analyze power plant functions and operation tasks during the design process, and fully consider human factors, to avoid the possibility of nuclear accident caused by human error. In the normal operation cycle of nuclear power plants, especially in the accidental operation cycle, it is necessary to frequently monitor and control the safety devices to avoid misoperation of the devices by operators, resulting in serious life safety accidents and nuclear accidents.

Since safety device plays a very important role in nuclear power plants, misoperation of the safety device may cause nuclear accidents. Therefore, there are stricter requirements for the quality appraisal, manufacturing, device isolation function (need to be isolated from non-safety device) and operation of safety device. In the prior art, a digital nuclear power plant control room with a single sequence safety display and control touch screen (S-SDCTS). The non safety visual display unit (NC-VDU) in the control room of the digital nuclear power plant sends screen adjustment commands to S-SDCTS of different sequences as needed, and the S-SDCTS of different sequences issues safety device control commands. The screen adjustment method of the single sequence safety touch screen can avoid misoperation to safety device caused by non safety device failure through unidirectional transmission of the adjustment signal, thereby realizing the functional isolation of safety and non safety device control. However, when the safety sequence of the nuclear power plant increases to multiple (for example 4), the single sequence safety touch screen S-SDCTS on the digital operator workstation in the control room of the nuclear power plant needs to be increased to 4 correspondingly, resulting in too many screens in the operator workstation and increased size of the workstation. Therefore, the operator's working range is large, the operator's work experience is not good, the human factor comfort is reduced, the work efficiency is affected, and the operating load and operation risk are increased.

What is needed, therefore, is to provide a multi sequence safety display and control touch screen system of a nuclear power plant and a control method, which can improve work efficiency and operational safety of nuclear power plants.

### SUMMARY OF THE INVENTION

To solve the problems of low work efficiency, large operating load and high safety operation risks in the prior art, one object of the present invention is to provide a multi sequence safety display and control touch screen system of a nuclear power plant and a control method, which provides a way of adopting unified centralized control and display in the safety portion to improve work efficiency and operational safety of nuclear power plants.

According to one embodiment of the present invention, a multi sequence safety display and control touch screen system of nuclear power plant, including:
at least one non safety display unit, configured to invoke safety device information to be operated and send out a safety sequence invoking signal;
a non safety processing unit connected to the non safety display unit, and configured to isolate the invoking signal, and send the processed invoking signal to a single sequence safety processing unit of the invoked sequence;
multiple single sequence safety processing units, each single sequence safety processing unit being connected to the non safety processing unit, and each single sequence safety processing unit being connected to a safety device of a corresponding sequence for receiving the processed invoking signal;
wherein the multi sequence safety display and control touch screen of nuclear power plant further includes a multi sequence safety display unit and a screen switching module connected to the multi sequence safety display unit;
the screen switching module is connected to each single sequence safety processing unit, and is configured to automatically switch device state information and operation interface of a single sequence safety processing unit of an invoked sequence under a first screen switching mode and lock device state information and operation interfaces of other sequences; and
the multi sequence safety display unit is configured to display the device state information and operation interface of the invoked sequence.

According to one aspect of the present invention, the multi sequence safety display unit includes an M-SDCTS, multiple single sequence safety processing units share one M-SDCTS, the device state information and operation interface of multiple single sequence safety processing units is switched to be displayed on the same M-SDCTS via the screen switching module.

According to one aspect of the present invention, the multiple single sequence safety processing units are also configured to receive, process and calculate the invoking signal of the corresponding sequence, operate and control the safety device according to the processing and calculation results, and feed back execution state information of the safety device to the non safety display unit and the M-SDCTS respectively.

According to one aspect of the present invention, each single sequence safety processing unit includes: an instruction receiving unit module, a processing and calculation unit module, a calculation result output module, a safety execution unit, and a state acquisition and processing unit module, wherein the instruction receiving unit module is connected to the non safety processing unit, the screen switching module, and the processing and calculation unit module respectively, and is configured to receive the processed invoking signal of the corresponding sequence, and transmit the invoking signal of the corresponding sequence to the screen switching module and the processing and calculation unit unit module respectively; the processing and calculation unit module is connected to the calculation result output module, and is configured to perform processing and calculation according to the invoking signal, and send the calculation result to the calculation result output module; the calculation result output module is connected to the safety execution unit; and the safety execution unit is configured to send the execution state information of the safety devices to the screen switching module respectively via the state acquisition and processing unit module, and send the execution state information of the safety devices to the non safety display unit at the same time.

According to one aspect of the present invention, the screen switching module further includes a second screen switching mode, and the second screen switching mode is manual screen switching and is configured to manually identify the safety sequence according to the information in the interface of the non safety display unit by an operator, and manually switch the screen via a screen switching button at a bottom of the M-SDCTS to display the device statse information and operation interface of corresponding sequence.

According to one aspect of the present invention, the screen switching button has an indicator light configured to indicate the selected sequence to the operator.

According to one aspect of the present invention, the multiple single sequence safety processing unitsincludes at least two single sequence safety processing units, the screen switching module includes a screen switching switch corresponding to each single sequence safety processing unit, each creen switching switch is configured to automatically or manually switch the device state information and operation interface of the singl sequence safety processing unit of the invoked sequence after receiving the invoking signal of corresponding sequence, and lock the device state information and operation interfaces of other sequences.

According to one aspect of the present invention, the instruction receiving unit module is further configured to search for the corresponding device state information and operation interface in a database after receiving the invoking instruction from the non safety display unit, and send related information to the screen switching module for switching; the device state information comprises valve opening and closing information, the operation interface comprises information of the corresponding sequence needs to be displayed.

According to one aspect of the present invention, the system includes a number of non safety display units and non safety processing units.

According to one aspect of the present invention, each non safety processing unit includes an instruction receiving unit module, a processing and calculation unit module, a calculation result output module, a non safety execution unit and a state acquisition and processing unit module.

According to anthoer embodiment of the present invention, a control method includes the steps of:
S1. the non safety display unit invoking the safety device information to be operated and sending out the safety sequence invoking signal, and the non safety processing unit isolating the invoking signal;
S2. the single sequence safety processing unit of corresponding sequence receiving the processed invoking signal and sending the calculation result to the screen switching module;
S3. automatically switching in the first screen switching mode, or manually switching in the second screen switching mode, the device state information and operation interface of the single sequence safety processing unit of the invoked sequence, and locking the device state information and operation interface of other sequences; and
S4. the screen switching module switching the device state information and operation interface of multiple single sequence safety processing units to display on the same multi sequence safety display unit, and displaying the device state information and operation interface of the invoked sequence.

According to one aspect of the present invention, between steps S2 and S3, the control method further includes the step of: S23. the single sequence safety processing unit receiving, processing and calculating the invoking signal of the corresponding sequence, controlling the operation of the safety device according to the calculation result, and feeding back the execution state information of the safety device to the non safety display unit and the multi sequence safety display unit respectively.

According to one aspect of the present invention, step S3 further includes: searching for the corresponding device state information and operation interface in the database after receiving the invoking signal from the non safety display unit, and sending related information to the screen switching module for switching; the device state information comprising valve opening and closing information, and the operation interface comprising information of the corresponding sequence needs to be displayed.

According to one aspect of the present invention, the step S3 of manually switching in the second screen switching mode the device state information and operation interface of the single sequence safety processing unit of the invoked sequence, and locking the device state information and operation interface of other sequences further includes: in the second screen switching mode, the operator manually identifying the safety sequence via the information in the interface of the non safety display unit, and manually switching the screen through the screen switching button on the multi sequence safety display unit, and displaying the device state information and operation interface of the corresponding sequence on the multi sequence safety display unit.

The technical solutions according to the embodiments of the present invention have the following advantages: human factors engineering; DCS system structural characteristics; physical isolation, electrical isolation and functional isolation requirements in safety regulations have been fully considered. A hard switching device (i.e., a screen swithching module) is added between the host computer display and control of S-SDCTS and the slave computer calculation and processing, to realize the multi sequence safety display and control touch screen. The operation of the different safety sequence devices can be realized when the non safety display (NC-VDU: Non safety Visual Display Unit) invoke a same M-SDCTS (switching screen confirmation after invoking M-SDCTS), thereby reducing the number of screens, reducing the size of the workstation and the working range of operator's movement, improving human comfort while ensuring the original physical isolation, electrical isolation and functional isolation, and improving work efficiency and the convenience and safety performance of the nuclear power plant operation.

According to the embodiments of the present invention, (1) in the digital nuclear power plant control room, less safety display and control touch screens are used to meet monitoring and control requirements of the safety devices, wich can provide operators with human machine interface facility (HMI) better meet the requirements of human factors engineering. (2) The one-to-one corresponding setting means in the prior art has been changed. In other words, in the prior art, each sequence safety processing unit needs to be correspondingly provided with a single sequence safety display and control touch screen, which results in low work efficiency, increased operation load and safety operation risks. According to the present invention, the operator in the control room of the nuclear power plant can monitor and control the nuclear power plant efficiently and safely due to the multi sequence safety display and control touch screen system. By adopting the many-to-one means, a screen switching module is added. Through the screen switching module, the device state information and operation interface of multiple single sequence safety processing units are switched and displayed on the same M-SDCTS, which optimizes the design of the digital human-machine interface of the nuclear power plant control room, and improves the work efficiency and the safety performance of the nuclear power plant operation.

### BRIEF DESCRIPTION OF THE DRAWINGS

Fig. 1 is a schematic structural diagram of a multi sequence safety display and control touch screen system of a nuclear power plant according to a first embodiment of the present invention;
Fig. 2 is an application structural diagram of the multi sequence safety display and control touch screen system of a nuclear power plant according to the first embodiment of the present invention;
Fig. 3 is an internal structure diagram of the multi sequence safety display and control touch screen system of a nuclear power plant according to the first embodiment of the present invention;
Fig. 4 is a display interface diagram of the multi sequence safety display and control touch screen system of a nuclear power plant according to the first embodiment of the present invention; and
Fig. 5 is a program flowchart of a control method according to a second embodiment of the present invention.

### DETAILED DESCRIPTION OF THE INVENTION

In order to solve the problems of low work efficiency, large operating load and high risk of safe operation in the prior art, the present invention aims to provide a multi sequence safety display and control touch screen system of a nuclear power plant and a control method, which can meet the requirements of the physical isolation, electrical isolation and functional isolation of the safety devices monitoring and control, reduce the number of screens of the operator workstations in the digital nuclear power plant control room to the greatest extent, and provide operators with human machine interface facilities that are better meet the requirements of human factors, so as to improve the efficiency of the operators and improve the safety of nuclear power plant operations.

The core idea of the present invention is the function of the screen switching module in the M-SDCTS application structure, which realizes the switching of the relevant safety sequence in the NC-VDU screen adjustment mode, and realizes the electrical isolation, physical isolation and functional isolation of different safety sequences. In the multi sequence safety display and control touch screen system structure, the screen switching module can realize two ways of switching (soft switching and hard switching), in which, the soft switching (first switching mode) automatically identifies the sequence of relevant safety sequence in the NC-VDU screen adjustment mode through the M-SDCTS system application software, and complete the automatic switching and activation of the M-SDCTS slave computer calculation and processing unit (i.e., one of the single sequence safety processing units in the multiple sequence safety processing unit). The slave computer calculation and processing units of the M-SDCTS have not been selected and activated (i.e., the single sequence safety processing units other than one of the single sequence safety processing unit in the multiple single sequence safety processing unit) does not display via the M-SDCTS screen and does not accept any operation instructions of the M-SDCTS screen. The sequence of the M-SDCTS slave computer calculation and processing unit automatically selected and activated is displayed by the sequence indicator on the surface of the M-SDCTS screen. Hard switching (the second switching mode) is operated by buttons on the screen surface. The button structure uniquely selects and activates, via mannual operation, the slave computer calculation and processing unit of M-SDCTS (i.e., one of the single sequence safety processing units in the multiple single sequence safety processing unit). The M-SDCTS slave computer calculation and processing unit that has not been selected and activated (i.e., the safety processing units other than one of the single sequence safety processing unit in the multiple single sequence safety processing unit) do not display on the M-SDCTS screen, and do not accept any operation instructions of the M-SDCTS. The sequence of the M-SDCTS slave computer calculation and processing unit that is considered to be selected and activated is displayed by the switch button on the surface of the M-SDCTS screen. By adopting a many-to-one manner, the present invention adds a screen switching module, through which the device state information and operation interface of multiple single sequence safety processing units are switched and displayed on the same screen, thereby optimizing the design of the digital human machine interface of the nuclear power plant control room, and improving the work efficiency and the safety of nuclear power plant operation.

To make the objects, technical solutions, and advantages of the present invention clearer, the embodiments of the present invention will be described in further detail below in conjunction with the accompanying drawings.

### The first embodiment

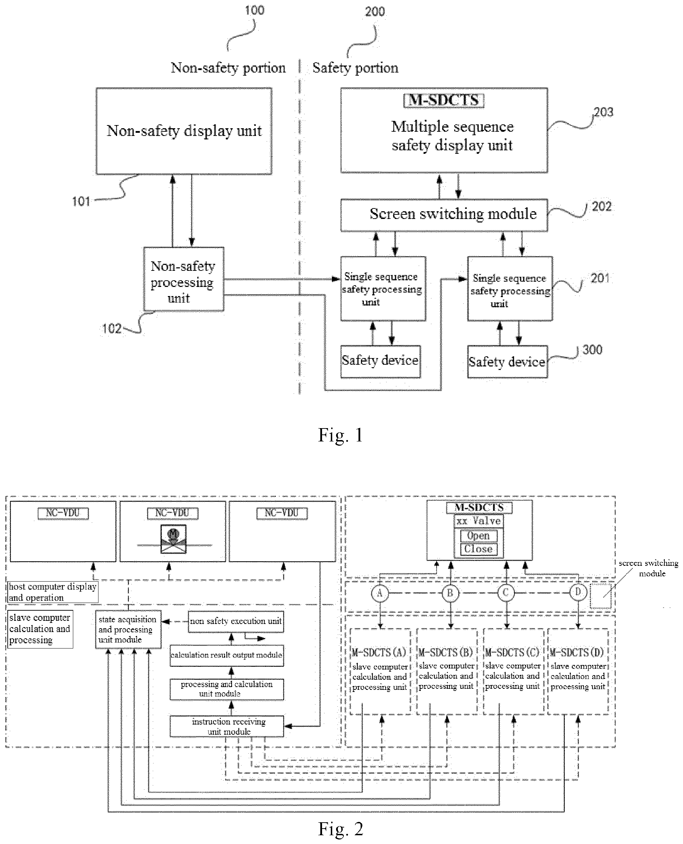

The first embodiment of the present invention provides a multi sequence safety display and control touch screen system of a nuclear power plant. Fig. 1 is a schematic structural diagram of a multi sequence safety display and control touch screen system of a nuclear power plant according to the first embodiment of the present invention. The multi sequence safety display and control touch screen system of a nuclear power plant includes:
at least one non safety display unit 101 and a non safety processing unit 102 located in the non safety portion 100;
Multiple single sequence safety processing units 201, a screen switching module 202, and a safety display unit 203 located in the safety portion 200;
wherein the non safety display unit 101 is configured to invoke the safety device information to be operated and send out the safety sequence invoking signal; the non safety processing unit 102 is connected with the non-safety display unit 101 and is configured to isolate the invoking signal, and send the processed invoking signal to the single sequence safety processing unit 201 of the invoked sequence. Each of the single sequence safety processing units 201 is connected to the non safety processing unit 102, and is connected to the safety device 300 of the corresponding sequence; each single sequence safety processing unit 201 is configured to receive the invoking signal processed by the non safety processing unit 102 and corresponding to the sequence. The screen switching module 202 is controllably connected with each single sequence safety processing unit 201 and configured to automatically switch the device state information and operation interface of the single sequence safety processing unit of the invoked sequence under the first screen mode, and lock the device state information and operation interface of other sequences; the multi sequence safety display unit 203 is connected to the screen switching module 202 to display the device state information and operation interface of the invoked sequence. The multi-sequence security level display unit 203 includes an M-SDCTS screen. The multiple single sequence safety processing units 201 share one M-SDCTS screen, and the device state information and operation interface of multiple single-sequence safety processing units 201 are switched and displayed on the same M-SDCTS screen through the screen switching module 202.

The present invention adopts the way that multiple sequences correspond to one screen, which solves the problem of invoking different single sequence safety display and control touch screen S-SDCTS via NC-VDU and causing defects in human design that restrict the operator's workstation by the control of safety device via S-SDCTS in the operator workstation of the digital nuclear power plant control room in the prior art. The present invention may reduce the number of screens of the operator's workstation in the digital nuclear power plant control room of the nuclear power plant to the greatest extent, and provide operators with a more human friendly human machine interface facilities, to improve the work efficiency of operators and improve the safety of nuclear power plant operation.

Further, multiple single sequence safety processing units 201 are also configured to receive, process and calculate the invoking signal of the corresponding sequence, perform operation control on the respective safety device 300 according to the calculation result, and feed bake the execution state information of the safety device 300 to the non safety display unit 101 and the multi sequence safety display unit 203 through respectivetate acquisition and processing unit module.

Fig. 2 is an application structural diagram of the multi sequence safety display and control touch screen system of a nuclear power plant according to the first embodiment of the present invention, which is divided into a non-safety portion 100 and a safety portion 200.

The non safety porition 100 includes a host computer display and operation part and a slave computer calculation and processing part. The host computer display and operation part includes multiple non safety display units NC-VDU. The slave computer calculation and processing part also includes multiple non safety processing units 102. Each non safety processing unit 102 includes an instruction receiving unit module, a processing and calculation unit module, a calculation result output module, a non safety execution unit and a tate acquisition and processing unit module.

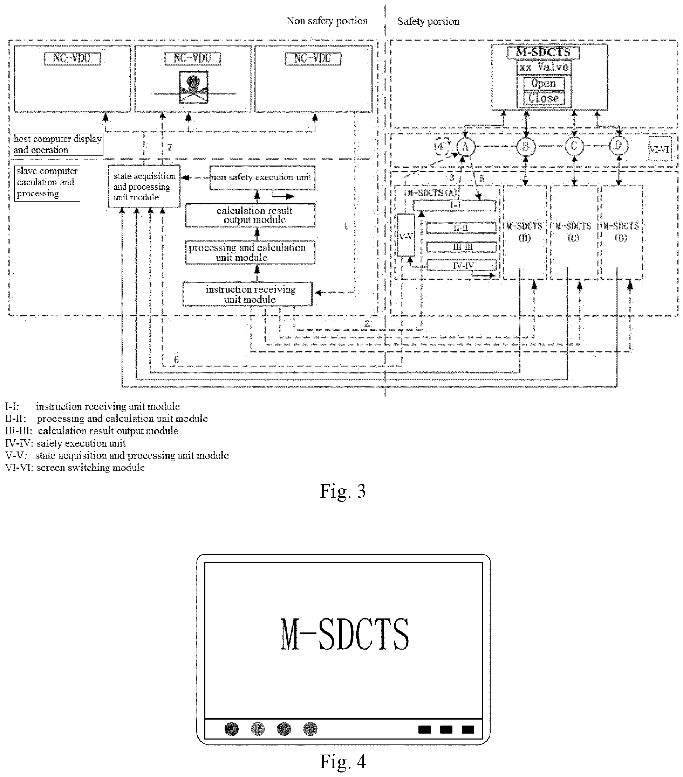

The safety portion 200 is the focus of the present invention, so the safety porition 200 will be described in detail as following. The safety portion 200 includes multiple single sequence safety processing units 201. The embodiment shown in Fig. 2 includes four parallelly arranged slave computer calculation and processing units A, B, C and D (i.e. 4 single sequence safety processing unit 201). Each single sequence safety processing unit 201 includes an instruction receiving unit module, a processing and calculation unit module, a calculation result output module, a safety execution unit, and a state acquisition and processing unit module. Each single sequence safety processing unit 201 is connected to one of the four screen switching switches (A, B, C and D) in the screen switching module 202 in a one-to-one correspondence. The four screen switching switches in the screen switching module 202 can be realized by any technical mean in the conventional technology. The internal controller can use the programming to realize the soft switching, or the corresponding button of the hard switching can be used to realize the switching function. The host computer display and operation part of the safety portion 200 also includes an M-SDCTS screen connected to the four screen switching switches in the screen switching module 200. The present invention provides the screen switching module 202 between the M-SDCTS screen (multi sequence safety display 203) and the four single sequence safety processing units 201 (i.e., the M-SDCTS (A) slave computer calculation and processing unit, M-SDCTS (B) slave computer calculation and processing unit, M-SDCTS (C) slave computer calculation and processing unit and M-SDCTS (D) slave computer calculation and processing unit in Fig. 2). Each single sequence safety processing unit 201 is connected to the corresponding instruction receiving unit module of the non safety portion, and each single sequence safety processing unit 201 is controllably connected with a corresponding switch of the screen switching module 202, and is configured to switch the device state information and operation interface of the single sequence safety processing unit of the invoked sequence in the first switching screen mode or the second switching screen mode, and lock the device state information and operation interface of other sequences. For example, after the M-SDCTS (A) slave computer calculation and processing unit receives the safety sequence invoking signal through the non-safety instruction receiving unit module, the switch A of the screen switching module 202 is automatically or manually switched to the device state information and operation interface of invoked sequence, and the device state information and operation interface of the other three sequences (i.e., sequence B, C and D) are locked. Referring to the display interface diagram of the M-SDCTS system shown in Fig. 4, the display interface area includes the M-SDCTS screen and four screen switching buttons located at the bottom of the screen. The screen switching buttons are equipped with indicator lights for displaying, configured to display the selected and activated M-SDCTS slave computer calculation and processing unit, provide the operator with clearer instructions and improve the operator's work efficiency.

Fig. 3 shows the internal structure diagram of the multi sequence safety display and control touch screen system of a nuclear power plant according to the first embodiment of the present invention, which illustrates the structure in Fig. 2 in more detail. In Fig. 3, the internal signal flow is marked with numbers, wherein in the application embodiment of the present invention, multiple NC-VDUs, one M-SDCTS and related sub-device constitute a digital operator workstation in the control room of a nuclear power plant. The following step 1 to step 7 correspond to the numbers 1-7 shown in Fig. 3.

In step 1, for the safety device that needs to be operated, due to the strong flexibility of the NC-VDU in operation and monitoring manners, relevant safety device is selected (invoked) in NC-VDU. The selection (invoking) instruction is sent to the non safety instruction receiving unit module.

In step 2, the non safety portion transfers the received device invoking instruction (not a direct device control instruction), after isolation, to the instruction receiving unit module of the safety portion of the M-SDCTS corresponding sequence.

In step 3, after receiving the invoking instruction from NC-VDU, the instruction receving unit module corresponding to the sequence of M-SDCTS searches the database for the corresponding device state information and operation interface (not yet displayed on the M-SDCTS screen), and send relevant information to the screen switching module of M-SDCTS.

In step 4, the screen switching module of M-SDCTS completes the screen switching recognition according to the relevant information received, locks the safety operation input function of the unselected sequence, and turns on the safety operation input function of the selected sequence. In the soft screen switching mode (the first screen switching mode), the screen switching module completes the automatic screen switching (the information of the effective sequence is displayed by the sequence indicator on the surface of the M-SDCTS screen), and the corresponding device state information and operation interface are displayed on the M-SDCTS screen. In the hard screen switching mode (second screen switching mode), the operator manually identify the safety sequence through the information in the NC-VDU interface, and completes manual screen switching with the switching button having indicator at the bottom of the M-SDCTS screen, and the corresponding device state information and operation interface are displayed on the M-SDCTS screen.

In step 5, under the premise of the M-SDCTS screen switching module management and control, the safty operation instruction of M-SDCTS is sent to the safety execution unit via the instruction receiving unit module, processing and calculation unit module, and calculation result output module, to ensure the independence of safety device control operations.

In step 6, the safety execution unit sends the state feedback of the instruction execution result to the non-safety state acquisition and processing unit module via the safety state acquisition and processing unit module. In this way, the signal transmission for NC-VDU to display the state of safety device is realized. At the same time, the safety state acquisition and processing unit module will also send the state signal to the M-SDCTS screen for display.

In step 7, the state acquisition and processing unit module of the non safety portion sends the received state feedback signal to the NC-VDU for display, which fulfills the requirements of the NC-VDU to monitor safety device and provides a flexible monitoring way for nuclear power plant operators.

### The second embodiment

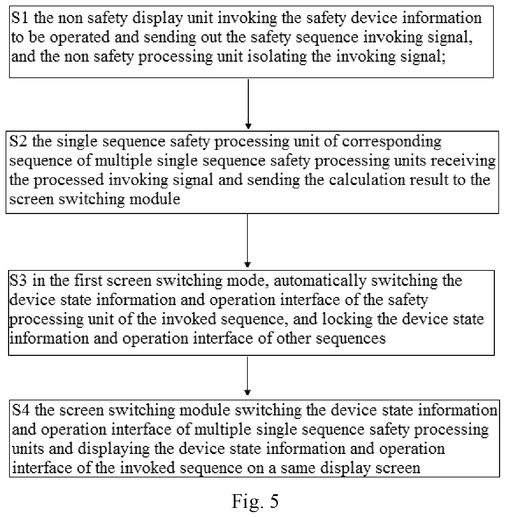

The second embodiment of the present invention provides a control method, which is suitable for the multi sequence safety display and control touch screen system of the nuclear power plant according to the first embodiment of the present invention. Referring to Fig. 3 and the flowchart in Fig. 5, the control method includes the steps of:
S1. the non safety display unit invoking the safety device information to be operated and sending out the safety sequence invoking signal, and the non safety processing unit isolating the invoking signal;
S2. the single sequence safety processing unit corresponding to the invoking signal among the multiple single sequence safety processing units receives the processed calling signal, and sends the calculation result to the screen switching module;
S3. the step includes two screen switching modes selectable by the operator, one is soft switching mode and the other is hard switching mode. In the first screen switching mode, the device state information and operation interface of the single sequence safety processing unit of the invoked sequence are automatically switched, and the device state information and operation interface of other sequences are locked. In the second screen switching mode, the operator identifies the safety sequence via the information in the surface of the non safety display unit and manually switches the screen via the screen switching button at the bottom of the M-SDCTS screen, and the multi sequence safety processing unit displays the device state information and operation interface of corresponding sequence. The device state information and operation interface of corresponding sequence is autimatically selected in the database after the single sequence safety processing unit of the corresponding sequence receives the invoking instruction from the non safety display unit. The device sate information includes valve opening and closing information. The operation interface includes information that needs to be displayed for the corresponding sequence.

Between steps S2 and S3, the control method further includes the step of S23, receiving, processing and calculating the invoking signal of the corresponding sequence, operating and controlling the safety device according to the calculation result, and feeding the execution sate information of the safety device back to the non safety display unit and the M-SDCTS respectively.

S4. the screen switching module switching the device state information and operation interface of multiple single sequence safety processing units to display on the same multi sequence safety display unit, and displaying the device state information and operation interface of the invoked sequence.

It should be noticed that, when the system provided in the first embodiment of the present invention is used to implement the control method, only the division of the above functional modules is used as an example. In actual application, the above functions can be allocated to different functional modules according to need. In other words, the internal structure of the device is divided into different functional modules, to complete all or part of the functions described above. In addition, the system and control method embodiments provided in the foregoing embodiments belong to a same concept. The specific implementation process can refer to the description of the method embodiment in details, which will not be repeated here.

One ordinary skill in the art can understand that, all or part of the steps in the foregoing embodiments can be implemented by hardware, or by a program instruction related hardware, and the program can be stored in a computer-readable storage medium. The controller mentioned above can be a central processing unit (CPU), or other general-purpose processors, digital signal processors (DSP), and application specific integrated circuits (ASIC), field-programmable gate array (FPGA) or other programmable logic devices, discrete gates or transistor logic devices, discrete hardware components, etc. The general-purpose processor may be a microprocessor or any other conventional processor. The aforementioned memory may be a storage device built into the terminal, such as a hard disk or a memory. The system of the present invention also includes a memory. The memory can also be an external storage device of the system, a plug-in hard disk, a smart media card (SMC), a secure digital (SD) card, and a flash card. The memory may also include an internal storage unit of the system and an external storage device for storing computer programs and other required programs and information. The memory can also be used to temporarily store information that has been output or will be output.

In summary, the present invention changes the one-to-one configuration manner in the prior art as a many-to-one configuration manner, which greatly reduces the number of safety screens in the control room, reduces device costs, reduces the size and scale of operator workstations, improves the comfort of the human-machine interface in the control room, reduces the operator's work movement range, reduces the operator's workload, improves the operator's work efficiency, and improves the safety of the operation of the nuclear power plant. In the digital nuclear power plant control room, a smaller number of M-SDCTS screens can be used to meet the requirements of safety device monitoring and control, thereby providing the operators with human machine interface facilities that meet the human engineering requirements.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments, it should be appreciated that alternative embodiments without departing from the scope of the appended claims. Although specific terms are employed herein, they are used in a generic and descriptive sense only and not for purposes of limitation.

## Claims

1. A multi sequence safety display and control touch screen system of nuclear power plant, comprising:
at least one non safety display unit (101), configured to invoke safety device information to be operated, and send out safety sequence invoking signal;
a non safety processing unit (102) connected to the non safety display unit (101), and configured to isolate the invoking signal, and send the processed invoking signal to a single sequence safety processing unit (201) of the invoked sequence;
multiple single sequence safety processing units (201), each single sequence safety processing unit (201) being connected to the non safety processing unit (102), and each single sequence safety processing unit (201) being connected to a safety device (300) of a corresponding sequence;
**characterized in that** the multi sequence safety display and control touch screen of nuclear power plant further comprises a multi sequence safety display unit (203) and a screen switching module (202) connected to the multi sequence safety display unit (203);
the screen switching module (202) is connected to each single sequence safety processing unit (201), and is configured to automatically switch device state information and operation interface of a single sequence safety processing unit (201) of an invoked sequence under a first screen switching mode, and lock device state information and operation interfaces of other sequences; and
the multi sequence safety display unit (203) is configured to display the device state information and operation interface of the invoked sequence.

2. The system according to claim 1, **characterized in that** the multi sequence safety display unit (203) comprises an M-SDCTS, multiple single sequence safety processing units (201) share one M-SDCTS, the device state information and operation interface of multiple single sequence safety processing units (201) is switched to be displayed on the same M-SDCTS via the screen switching module (202).

3. The system according to claim 2, **characterized in that** the multiple single sequence safety processing units (201) are also configured to receive, process and calculate the invoking signal of the corresponding sequence, operate and control the safety device (300) according to the processing and calculation results, and feed back execution state information of the safety device (300) to the non safety display unit (101) and the M-SDCTS respectively.

4. The system according to claim 2, **characterized in that** each single sequence safety processing unit (201) comprises: an instruction receiving unit module, a processing and calculation unit module, a calculation result output module, a safety execution unit, and a state acquisition and processing unit module, wherein
the instruction receiving unit module is connected to the non safety processing unit (102), the screen switching module (202), and the processing and calculation unit module respectively, and is configured to receive the processed invoking signal of the corresponding sequence, and transmit the invoking signal of the corresponding sequence to the screen switching module (202) and the processing and calculation unit unit module respectively;
the processing and calculation unit module is connected to the calculation result output module, and is configured to perform processing and calculation according to the invoking signal, and send the calculation result to the calculation result output module;
the calculation result output module is connected to the safety execution unit; and
the safety execution unit is configured to send the execution state information of the safety devices (300) to the screen switching module (202) respectively via the state acquisition and processing unit module, and send the execution state information of the safety devices (300) to the non safety display unit (101) at the same time.

5. The system according to claim 2, **characterized in that** the screen switching module (202) further comprises a second screen switching mode, and the second screen switching mode is manual screen switching and is configured to manually identify the safety sequence according to the information in the interface of the non safety display unit (101) by an operator, and manually switch the screen via a screen switching button at a bottom of the M-SDCTS to display the device statse information and operation interface of corresponding sequence.

6. The system according to claim 5, **characterized in that** the screen switching button has an indicator light, configured to indicate the selected sequence to the operator.

7. The system according to claim 5, **characterized in that** the multiple single sequence safety processing units (201) comprises at least two single sequence safety processing units, the screen switching module (202) comprises a screen switching switch corresponding to each single sequence safety processing unit (201), each creen switching switch is configured to automatically or manually switch the device state information and operation interface of the singl sequence safety processing unit of the invoked sequence after receiving the invoking signal of corresponding sequence, and lock the device state information and operation interfaces of other sequences.

8. The system according to claim 4, **characterized in that** the instruction receiving unit module is further configured to search for the corresponding device state information and operation interface in a database after receiving the invoking instruction from the non safety display unit (101) and send related information to the screen switching module (202) for switching, the device state information comprises valve opening and closing information, and the operation interface comprises information of the corresponding sequence needs to be displayed.

9. The system according to claim 1, **characterized in that** the system comprises a plurality of non safety display unit (101)s and a plurality of non safety processing unit (102)s.

10. The system according to claim 9, **characterized in that** each non safety processing unit (102) comprises an instruction receiving unit module, a processing and calculation unit module, a calculation result output module, a non safety execution unit and a state acquisition and processing unit module.

11. A control method using the system according to any one of claims 1-10, **characterized in that** the control method comprises the steps of:
SI: the non safety display unit (101) invoking the safety device information to be operated and sending out the safety sequence invoking signal, and the non safety processing unit (102) isolating the invoking signal;
S2: the single sequence safety processing unit (201) of corresponding sequence receiving the processed invoking signal and sending the calculation result to the screen switching module (202);
S3: automatically switching in the first screen switching mode, or manually switching in the second screen switching mode, the device state information and operation interface of the single sequence safety processing unit (201) of the invoked sequence, and locking the device state information and operation interface of other sequences; and
S4: the screen switching module (202) switching the device state information and operation interface of multiple single sequence safety processing units (201) to display on a same multi sequence safety display unit (203), and displaying the device state information and operation interface of the invoked sequence.

12. The control method according to claim 11, **characterized in that**, between step 2) and step 3), the control method further comprises the step of:
the single sequence safety processing unit (201) receiving, processing and calculating the invoking signal of the corresponding sequence, controlling the operation of the safety device (300) according to the calculation result, and feeding back the execution state information of the safety device (300) to the non safety display unit (101) and the multi sequence safety display unit (203) respectively.

13. The control method according to claim 11, **characterized in that** automatically switching in the first screen switching mode, the device state information and operation interface of the single sequence safety processing unit (201) of the invoked sequence, and locking the device state information and operation interface of other sequences of S3 further comprises: searching for the corresponding device state information and operation interface in the database after receiving the invoking signal from the non safety display unit (101), and sending related information to the screen switching module (202) for switching, wherein the device state information comprises valve opening and closing information, and the operation interface comprisesg information of the corresponding sequence needs to be displayed.

14. The control method according to claim 11, **characterized in that** manually switching in the second screen switching mode the device state information and operation interface of the single sequence safety processing unit (201) of the invoked sequence, and locking the device state information and operation interface of other sequences of S3 further comprises: in the second screen switching mode, the operator manually identifying the safety sequence via the information in the interface of the non safety display unit (101), and manually switching the screen through the screen switching button on the multi sequence safety display unit (203), and displaying the device state information and operation interface of the corresponding sequence on the multi sequence safety display unit (203).
